# EUROPEAN PATENT APPLICATION

(11) **EP 3 531 291 A1**
(43) Date of publication of application: **28.08.2019**
(21) Application number: 19158201.4
(22) Date of filing: 20.02.2019
(51) Int. Cl.: G06F 11/34, G06F 11/273

(54) **MEASUREMENT DEVICE FOR MEASURING THE PROCESSING LATENCY OF A COMPUTER SYSTEM, METHOD OF USING SUCH A DEVICE**

(30) Priority: 23.02.2018 FR 1851574
(71) Applicant: Blade, 75002 Paris (FR)
(72) Inventor: ANGER, William, 94200 IVRY-SUR-SEINE (FR); PORTMANN, Maxime, 75017 PARIS (FR)
(74) Representative: IP Trust

(57) **Abstract**

The invention relates to a measurement device (9) for measuring processing latency of a computer system (1), the measurement device (9) comprising a controller (12), a control interface (10) for initiating a measurement, a connecting interface (13) for connecting the controller (12) to an input port of the computer system (1), at least one electrical transducer (11), connected to the controller (12), for measuring an output signal of an output device and for providing a measured output signal to the controller (12). The invention also relates to a method for measuring processing latency of a computer system using the measurement device.

## Description

### FIELD OF THE INVENTION

The present invention relates to a measurement device and a measurement method for measuring the processing latency of a computer system.

### BACKGROUND OF THE INVENTION

In video games, the delay between pressing a key of an input device (a keyboard or a mouse for instance) and displaying changes on the computer display is often referred to as "input lag". This delay, more generally defined as "processing latency" in the present disclosure, is caused by the contribution of various origins: the signal lag at the input device, the network lag if the processing unit is remote from the input/output devices, latency at the processing unit for preparing a new video frame and lag caused by the computer display itself, including pixel response time.

Most sensitive software application, such as video game or animated simulation requires an overall processing latency of less than a few tens of ms and, generally, exceeding 30 ms is noticeable to the average user.

It is therefore particularly important to measure very precisely processing latency when developing application software, modifying underlying system functions or hardware of a computer system. This is even more true when the computer system architecture physically separates the application processing and storage part, located at a host location, from the input/output devices, located at the user desktop, as this for instance known from US2017228851 and FR3047576.

General methods for measuring the response latency of a system are disclosed for instance in EP2857973 or EP2711915. Those methods capture images of a display, or more generally of a scene, and process those images to determine the latency of the system. The latency precision measurement of those methods are limited by the frame rate of the camera.

For computer systems, known methods of measuring processing latency comprises configuring the computer system by installing and executing a measurement software. Under the supervision of the measurement software, the processing unit of the computer system sends a distinctive pattern to an output device (for instance to provoke the displaying of a predetermined image on the computer display) upon reception of a command from an input device (for instance, the command corresponding to a key pressed on the keyboard). A high-speed camera, with a known frame rate that may exceed 1000 fps, is simultaneously recording the input device and the display panel. Processing latency is then measured by replaying the recorded video, precisely marking the frames at which the input/output events occurred (the frames at which the key is pressed and the distinctive pattern displayed on the computer display, in the example given above), and counting the number of frames between the two events.

This method is time consuming, in particular when a plurality of measurements has to be prepared. It does not provide "real time" latency information, directly after the measurement campaign, as the recorded video should be analyzed frame by frame, measurement by measurement. Also, precisely measuring the processing latency to the millisecond level require a high-speed camera with a capability of capturing images at a frame rate of at least 1000 fps. Such camera is very costly.

### OBJECT OF THE INVENTION

The present invention aims at providing a simple measurement method and device that allow to directly establish, directly and immediately after a measurement campaign, the processing latency of a computer system.

### SUMMARY OF THE INVENTION

To this effect, the invention relates to a measurement device for measuring processing latency of a computer system, the computer system comprising a processing unit, an input port for connecting an input device to the processing unit, and an output device connected to the processing unit. The processing unit is configured to send a distinctive pattern to the output device upon reception of a command from the input port.

According to the invention, the measurement device comprises:
- a controller;
- a control interface, connected to the controller, for initiating a measurement;
- a connecting interface for connecting the controller to the input port of the computer system;
- an electrical transducer, connected to the controller, for measuring an output signal of the output device and for providing a measured output signal to the controller.

The controller is configured to:
- upon initiation of a measurement, generate and send an input signal to the computer system;
- detect, from the measured output signal, that the distinctive pattern has been processed by the output device; and
- determine the time elapsed between the sending of the input signal and the detection that the distinctive pattern has been processed, to establish a measure of the computer system processing latency.

According to further non-limitative features of the invention, either taken alone or in any technically feasible combination:
- the controller comprises or is connected to a memory for storing the measure;
- the distinctive pattern causes a variation in the output signal of the output device;
- the input port is a USB connector;
- the connecting interface is configured for connecting the controller to input ports of a plurality of computer systems, the measurement device is provided with a plurality of electrical transducers for measuring an output signal of the respective output devices of the plurality of computer systems and the controller is configured to establish concurrently a measure of each computer system processing latency;
- the output device is a computer display, comprising a luminescent panel, and the sensor is a photodetector ;
- the measurement device comprises a plurality of photodetectors for measuring output signals from different areas of the computer display luminescent panel.

The invention also relates to a method for measuring processing latency of a computer system, the computer system comprising a processing unit, an input port for connecting an input device to the processing unit, and an output device connected to the processing unit. The processing unit is configured to send a distinctive pattern to the output device when a command is received from the input device connector.

According to the invention, the measurement method comprises:
- connecting the connecting interface of the measurement device to the input port of the computer system;
- operating the measurement device to initiates at least one measurement.

According to further non-limitative features of the invention, either taken alone or in any technically feasible combination:
- the measurement device configures the processing unit, with a measurement software, to send a distinctive pattern to the output device when a command is received from the input device port;
- the method further comprising downloading the at least one measurement from the measurement device to a test computer for further analysis;
- the measurement device comprises setting a number of measurements to be repetitively performed;
- operating the measurement device comprises performing a calibration step of the electrical transducer.

### FIGURES

Many other features and advantages of the present invention will become apparent from reading the following detailed description, when considered in conjunction with the accompanying drawings, in which:
- Figures 1 and 2 represent two computer system configurations for which processing latency may be measured by the method and device according to the invention;
- Figure 3 represents an exemplary measurement device according to the invention.

### DETAILED DESCRIPTION OF SPECIFIC EMBODIMENTS OF THE INVENTION

For simplification of the following description, the same references are used for identical elements or elements achieving the same function in the different embodiments of the invention that will be described.

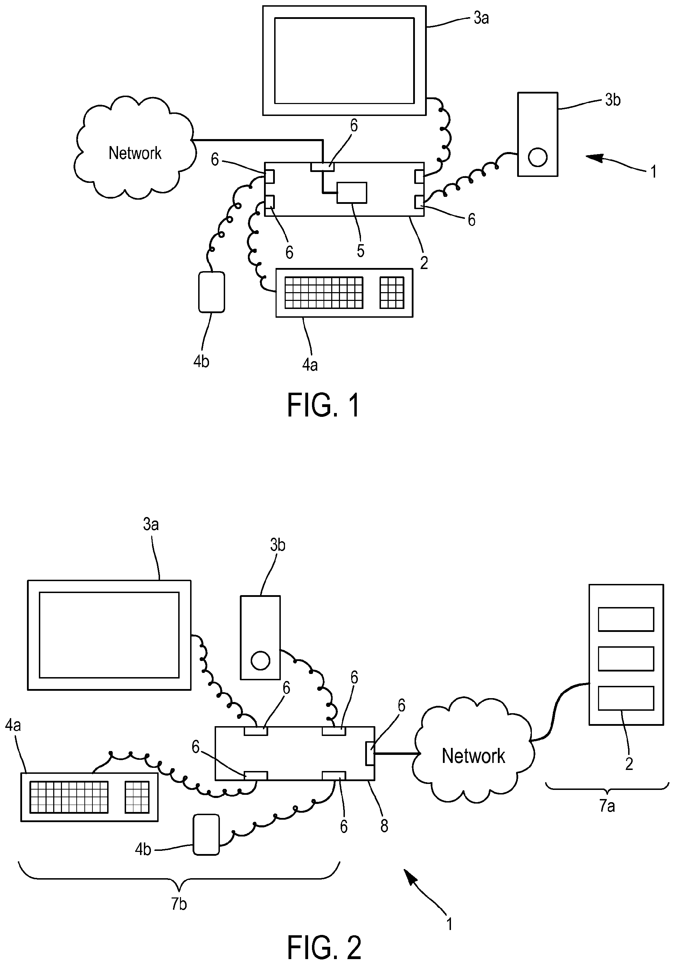

Figure 1 represents a first possible configuration of a computer system 1 for which processing latency may be measured by the method and device according to the invention. Computer system 1 comprises a processing unit 2. The processing unit 2 includes processing devices such as a microprocessor, a memory unit and other forms of storage, a graphic card, a network controller 5 and other type of input and/or output controller. Input/output controllers connect the processing unit 2 to input/output devices 3, 4, 5 through a plurality of ports 6, such as, for instance, USB connectors, HDMI connectors, Ethernet connectors or wireless ports 6 deploying communication standards such as Bluetooth™ or Wi-Fi.

Computer system 1 also comprises output devices 3, such as computer display 3a and speaker 3b, and input devices 4, such as keyboard 4a and mouse 4b, connected to their respective port 6 of the processing unit 2. The processing unit 2 of the example represented in figure 1 is also connected to a network, for instance the internet, through the network controller 5. The computer system 1 may comprise additional input and/or output devices to the one listed above, for illustrative purpose only.

Figure 2 represents another possible configuration of a computer system 1 for which processing latency may be measured by the method and device according to the invention. The computer system of figure 2 is composed of a host side 7a remotely situated from a client side 7b. Host 7a and client 7b are communicating with each other through a network.

The host computer 7a hosts a processing unit 2, or a plurality of such processing units, similar to the processing unit 2 described in relation to the configuration of figure 1. Host computer 7a provides all or most of the processing and storage components, operating system and software application used by the client.

Input and output devices 3, 4, 5 are located on the client side 7b, and connected to the input/output ports 6 of a connection box 8. Such input/output ports 6 may be of the same nature and standards as the one described in relation to figure 1. Connection box 8 is routing the signals from/to the input/output devices 3, 4, 5 through the network to/from the processing unit 2 of host computer 7b.

Such a configuration is known and described in more details in US2017228851 and FR3047576, already cited in the background part of this document.

A computer system 1 suitable for applying the measurement method and device according to the invention may be configured differently from the two illustrative examples of figures 1 and 2. But preferably, a suitable computer system 1 comprises a processing unit 2, an input port 6 for connecting an input device, and an output device connected, directly or indirectly, to the processing unit 2.

According to the present disclosure, a measurement software is loaded and executed in processing unit 2. Such measurement software configures the computer system 1 such that, upon reception of a command from input port 6, the processing unit 2 is sending a distinctive pattern to an output device. For instance, the measurement software may configure the processing unit 2 such that when a predefined command (for instance a predefined key of the keyboard being pressed) is received by processing unit 2, from USB controller 6, the processing unit 2 prepares a distinctive frame and sends that frame to the HDMI controller 6 to which the computer display 3a is connected.

The input port 6 from which the command is received may be any available input port 6 of processing unit 2 or of connection box 8, typically the port to which a keyboard, a mouse or a trackpad is connected. The distinctive pattern may not necessarily be provided to a computer display 3a, it may be addressed to the speaker 3b or to the network controller 5 of processing unit 2 or connection box 8. In all cases, the pattern received and interpreted by the output device, is transformed into a visual, auditory, electrical signal, or a signal of any other nature, that can be measured. To be distinctive, the pattern should provoke a variation in the signal transduced by the output device.

Also, the measurement software may be configured to select which input port 6 and which output device of the computer system 1 will be associated with the measurement device for a subsequent measurement campaign.

In a particular embodiment, the measurement software is also configured to stress the computer system 1 while a measurement or a measurement campaign is performed. Such a feature allows to determine the sensitivity of the latency to the processing treatments performed by the computer system 1. For instance, the measurement software may be configured to, concurrently with the measurement, execute computation programs involving the processing or transfer of data on or between selected elements of the processing unit 2. The computation program may comprise processing complex image on the graphic card for their display on the computer display while the measurement is performed. It may comprise processing complex treatment on the processing unit or transferring large amount of data to the network controller.

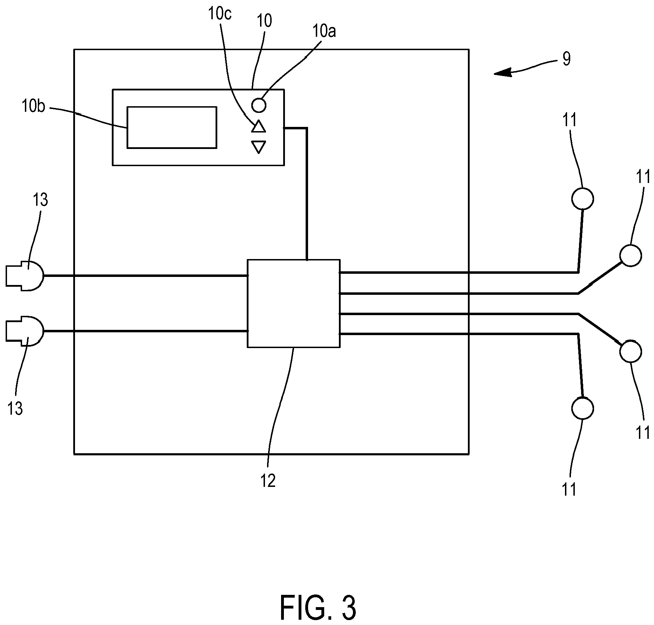

Turning to the description of figure 3, a measurement device 9 for measuring the processing latency of computer system 1 comprises a connecting interface 13 for connecting the measurement device 9 to an input port 6 of the computer system 1, a control interface 10 for initiating a measurement and at least one electrical transducer 11 (designated as "sensor" 11, in this disclosure for concision) for directly transforming an output signal emitted by the output device in an electrical signal.

Generally speaking, the measurement device 9 is coupled to the computer system 1 and to the measurement software being executed in the processing unit 2, such that a measurement campaign may be performed. More precisely, a connector of connecting interface 13 is connected to an input port 6 of the computing system, and the sensor 11 placed on, or close to, an output device. In some embodiments, a measurement initiated by the user through the control interface 10, provokes the emission of an input signal to the input port 6 of the computing system 1 via the connecting interface 13. The input signal is decoded at the input port 6 and a command sent to the processing unit 2. By the operation of the measurement software, and upon reception of the command, the processing unit 2 prepares and sends the distinctive pattern to the output device. The output signal emitted by the output device is directly measured by the sensor 11. By "directly measuring", it is meant that the measurement is not processed, for instance digitally, to avoid the introduction of delays into the measurement, before it is received at a controller 12 of measurement device. It is then possible to determine the processing latency of computer system 1, by determining the time elapsed between the generation of the input signal and the detection that the distinctive pattern has been processed by the output device.

To perform the measurement and coordinate its different components, the measurement device 9 also comprises a controller 12, connected to the control interface 10, to the connecting interface 12 and to the sensor 11. The controller 12 may comprise a microcontroller, a microprocessor or programmable hardware such as a FPGA chip. It also comprises, or is connected to, a memory for storing the microcode and/or software necessary to its operation, and for measurement storage. In some instance, the memory may also contain a copy of the measurement software so that it can be easily transferred to the computer system 1 before operating the measurement device 9. The controller 12 is configured to:
- upon initiation of a measurement at the control interface 10, generate and send an input signal to computer system 1,
- detect, from the measured output signal provided by the sensor 11, that the distinctive pattern has been processed by the output device; and
- determine the time elapsed between the sending of the input signal and the detection that the distinctive pattern has been processed, to establish a measure of the computer system processing latency.

The measurement may then be stored in the memory available in the measurement device 9 or displayed at the control interface 13.

The controller 12 is operating at an operation frequency that is set by an internal or external clock of the measurement device. The operation frequency is much higher than the kHz range of a very high-speed camera. The operation frequency is for instance in the MHz range or in the hundreds of MHz range. Consequently, the detection from the measured output signal that the distinctive output pattern has been processed by the output device can be performed with a very high precision in time, much below than the millisecond precision that is required for measuring latency of a computer system for gaming applications.

The controller 12 may convert in digital form, the electrical signal provided by the sensor 11 and compare the sample value to a preconfigured threshold to detect that the distinctive pattern has been processed by the output device. As mentioned above this conversion and comparison can be repeated at a frequency much higher than the kHz level that is achievable by high end very high-speed cameras. Also, the digital data established by the controller may be stored during the measurement, so that detailed analysis of the measurement campaign can be performed.

The measurement device 9 may comprise a battery or other form of energy storage, for operating its the various components. Advantageously, the measurement device 9 is receiving its operational power from the computing unit 2, through one connector of the connecting interface 13. For instance, the connector may be inserted into an USB port 6 of the computing unit 2 that provide sufficient power to operate the device 9.

In the embodiment represented on figure 3, the measurement device 9 comprises a plurality of sensors 11. The sensors may be of all of the same type or of differing types. The sensor 11 may be an optical sensor, such as a photodetector (e.g. a photodiode, a photo transistor), to measure the output signal from the luminescent panel of the computer display 3a, or more generally, from any light emitting output device. The sensor 11 may be a microphone or another type of vibration sensor to measure the output signal of the speaker 3b or similar output device. Sensor 11 may also be a data analyzer to be coupled to the network controller 5 or connection box 8 of the computer system 1.

Advantageously, the sensor 11 or some of the sensors 11 are provided with bearing elements so that it can be fixed on, or close to, the output device in a position enhancing the quality of the measurement of the output signal. For instance, one or more photodetectors could be fixed on the computer display, facing the luminescent panel or one or more microphones fixed in front of the active face of a speaker.

In a particularly advantageous example, the measurement device 9 comprises multiple optical sensors 11, such as photodetectors, placed at different locations of the luminescent panel of the computer display 3a. Each optical sensor provides the controller 13 with a respective measure of the output signal from the computer display. The controller 13 may determine a measurement of the processing latency associated with each sensor 11 and may provide an average value of latency that may be more representative of the actual latency of the computer system 1. Independently of the number of photodetectors provided in the measurement device, each photodetector can be place on or near the computer display to be associated with a limited number of pixels.

Similarly, the connecting interface 13 of measurement device 9 may also comprise a plurality of port connectors that may all be of the same type or of differing types. For instance, the connecting interface 13 may comprise a plurality of USB connectors, for connecting a single measurement device 9 to a plurality of computer systems 1. In this way, the measurement of processing latency of a plurality of computer systems 1 may be initiated simultaneously or at least concurrently. It may also be useful to provide different types of connectors such that the measurement device 9 may be used for a great variety of input ports 9 standards. In some instances, the connecting interface 13 may also comprise wireless ability to connect to computer system 1. By selecting a particular type of connector for a measurement, it is possible to assess the latency of computer system 1 taking into account the type of input port 6 used and to provide a more representative measurement.

Control interface 10 may comprise, as represented schematically on figure 3, a push button 10a for initiating the measurement or any other interface element allowing a user to initiate the measurement. In some instances, the control interface 10 may comprise a screen 10b to display short text messages or pictures for configuring the measurement device 9 or preparing a measurement campaign. In addition to the push button 10a, scroll buttons 10c of the control interface 10 may facilitate the navigation in displayed menus and the selection of the desired parameters. For instance, when the measurement device 9 comprises a plurality of input connectors and a plurality of sensors 11, the control interface 10 may be used to associate one input connector to one or more sensors, such that the controller 12 may process signals and establish an appropriate measurement that match the measurement software configuration.

In another example of a device according to the invention, the control interface does not comprise any button or screen but provides a communication port to a separate test device, such as a test computer, that is configured to operate and configure the measurement device. The communication port may be of any type, for instance using a wire or wireless, for instance of the WIFI type.

Alternatively, the measurement device 9 may be operated and configured by the measurement software being executed on the computer system 1. Communication between the measurement software and the measurement device may be performed through input port 6 of the computing system to which the measurement device 9 is connected. In such an embodiment, the control interface 10 is corresponding to the connecting interface 13.

The method for measuring the processing latency of computer system 1 is straight forward. The measurement software is first loaded into the computer system 1 and executed in the processing unit 2. The measurement device 9 is then connected at an input port 6 of the computer system 1, for instance by plugging in a connector of the connecting interface 13 to the keyboard input port 6 of the processing unit 2 or of connection box 8. At least one sensor 11 is coupled to an output device of the computer system 1, i.e. placed on, or sufficiently close to, the output device so that it can measure the output signal. If necessary, the measurement software is configured by the user to associate the selected input port, into which the measurement device 9 is connected, to the selected output device, which is coupled to the sensor 11. Then, the measurement device 8 is operated to initiate at least one measurement, for instance by pressing the push button 10a of control interface 10 or by operating the measurement software. As mentioned earlier, the measurement device 9 may have been configured to perform a measurement campaign consisting in a plurality of successive measurements on the computer system 1.

Advantageously, the measurement software is stored in the memory of the measurement device 9 and upon connection of the device to the computer system 1, the software is automatically uploaded and executed on the processing unit 2. The measurement device may also configure the measurement software for a measurement campaign.

The method of measuring latency may also comprise a calibration step of the measurement device, prior to performing a measurement. During the calibration step, the controller 12 is instructing, through the connecting interface 13, the processing unit 2 to prepare and send to an output device a predefined calibration pattern (or a plurality of such patterns). A calibration pattern is associated with an expected measured output signal. This expected measured output signal can be compared to the actual output signal provided to the controller 12 by one sensor 11. The difference may be used by the controller 12 to calibrate the measures provided by that particular sensor 11, in the following measurement campaign.

Also, after one or a plurality of measurements have been performed and stored in the device memory, the measurement data may be downloaded from the measurement device 9 to a test computer. To this end, the measurement device 9 may be connected to the test computer through one connector of the connecting interface 13 or through the control interface 10 when implemented as a communication port. In one particularly advantageous embodiment, the device 9 is connected to a keyboard input port of the test computer. The controller 12 is emulating a keyboard and the measurements are coded and transferred to the test computer as a string of characters in the same way a keyboard would do. The measurements, in the form of a string of characters, could be integrated into any application executing onto the test computer, such as a calculation sheet. The download may be initiated from the control interface 10, by selecting for instance the appropriate function through the scroll and push buttons 10b, 10c.

Other variations to the disclosed embodiments can be understood and effected by those skilled in the art in practicing the claimed invention, from a study of the drawings, this disclosure, and the appended claims.

## Claims

1. A measurement device (9) for measuring processing latency of a computer system (1), the computer system (1) comprising a processing unit (2), an input port (6) for connecting an input device to the processing unit (2), and an output device (3a, 3b) connected to the processing unit(2), the processing unit (2) being configured to send a distinctive pattern to the output device (3a, 3b) upon reception of a command from the input port (6), the measurement device (9) comprising:
• a controller (12);
• a control interface (10), connected to the controller (12), for initiating a measurement;
• a connecting interface (13) for connecting the controller (12) to the input port (6) of the computer system (1);
• at least one electrical transducer (11), connected to the controller (12), for measuring an output signal of the output device (3a, 3b) and for providing a measured output signal to the controller (12);
the controller (12) being configured to:
- upon initiation of a measurement, generate and send an input signal to the computing system (1),
- detect, from the measured output signal, that the distinctive pattern has been processed by the output device (3a, 3b); and
- determine the time elapsed between the sending of the input signal and the detection that the distinctive pattern has been processed, to establish a measure of the computer system processing latency.

2. Measurement device (9) according to claim 1 wherein the controller (12) comprises or is connected to a memory for storing the measure.

3. Measurement device (9) according to one of the previous claim wherein the distinctive pattern causes a variation in the output signal of the output device (3a, 3b).

4. Measurement device (9) according to one of the preceding claims, wherein the input port (6) is a USB connector.

5. Measurement device (9) according to one of the preceding claims wherein:
• the connecting interface (13) is configured for connecting the controller (12) to input ports (6) of a plurality of computer systems (1);
• the measurement device (9) is provided with a plurality of electrical transducer (11) for measuring an output signal of the respective output devices (3a, 3b) of the plurality of computer systems (1);
• the controller (12) is configured to establish concurrently a measure of each computer system processing latency.

6. Measurement device (9) according to one the preceding claims wherein the output device is a computer display (3a), comprising a luminescent panel, and the electrical transducer (11) is a photodetector.

7. Measurement device (9) according to the preceding claims comprising a plurality of electrical transducers (11) for measuring output signals from different areas of the computer display luminescent panel (3a).

8. A method for measuring (9) processing latency of a computer system (1), the computer system (1) comprising a processing unit (2), an input port (6) for connecting an input device to the processing unit (2), and an output device (3a, 3b) connected to the processing unit (2), the processing unit (2) being configured to send a distinctive pattern to the output device (3a, 3b) when a command is received from the input device port (6), the measurement method comprising:
- connecting the connecting interface (13) of a measurement device (9) according to the any of the preceding claims to the input port of the computer system;
- operating the measurement device (9) to initiates at least one measurement.

9. The method for measuring according to the previous claim wherein connecting the measurement device (9) configures the processing unit (2), with a measurement software, to send a distinctive pattern to the output device (3a, 3b) when a command is received from the input device port (6).

10. The method according to one of claims 8 and 9 further comprising downloading the at least one measurement from the measurement device (9) to a test computer for further analysis.

11. The method according to one of claims 8 to 10 wherein operating the measurement device (9) comprises setting a number of measurements to be repetitively performed.

12. The method according to one of claims 8 to 11 wherein operating the measurement device (9) comprises performing a calibration step of the electrical transducer (11).
